(19)
Europäisches
Patentamt
European
Patent Office
Office européen
des brevets

(11) **EP 1 852 825 A1**

(12) **EUROPEAN PATENT APPLICATION**
published in accordance with Art. 158(3) EPC

(43) Date of publication:
**07.11.2007 Bulletin 2007/45**

(21) Application number: **06701322.7**

(22) Date of filing: **19.01.2006**

(51) Int Cl.:
***G06T 7/20*** (2006.01)

(86) International application number:
**PCT/JP2006/301170**

(87) International publication number:
**WO 2006/080367 (03.08.2006 Gazette 2006/31)**

(84) Designated Contracting States:
**DE FR GB**

(30) Priority: **28.01.2005 JP 2005021517**

(71) Applicant: **Olympus Corporation**
**Tokyo 151-0072 (JP)**

(72) Inventors:
• **KOSAKA, Akio,**
**c/o Olympus Corporation**
**Tokyo 152-0072 (JP)**

• **IWAKI, Hidekazu,**
**c/o Olympus Corporation**
**ho 5-chome, Hachioji-shi, Tokyo 1930832 (JP)**

(74) Representative: **von Hellfeld, Axel**
**Wuesthoff & Wuesthoff**
**Patent- und Rechtsanwälte**
**Schweigerstrasse 2**
**81541 München (DE)**

(54) **PARTICLE GROUP MOVEMENT ANALYSIS SYSTEM, AND PARTICLE GROUP MOVEMENT ANALYSIS METHOD AND PROGRAM**

(57) There is provided a particle-group movement analysis system which is capable of detecting from a plurality of objects in a form of a particle, an object in the form of a particle which moves in a manner different from the other objects in the form of a particle, a particle-group movement analysis method, and a program. The particle-group movement analysis system includes an image capture section (101) which captures a time-series image of the plurality of objects in the form of a particle, a characteristic information computing section (104) which calculates an amount of a particle Pn in each small area R(i, j) corresponding to each pixel in the time-series image which is captured, a time-change detecting section (105) which detects a divergence of the number of particles, and a factor specifying section (106) which specifies an area which includes a particle Pab which has become a cause of a divergence change, or an abnormal area which is an area near the particle Pab which has become the cause of the divergence change.

FIG. 1

**Description**

TECHNICAL FIELD

The present invention relates to a particle-group movement analysis system, particularly, a system which analyzes a movement of a particle inside a cell, and a movement of a person in a crowd, a particle-group movement analysis method, and a PROGRAM.

BACKGROUND ART

In an image of a cell which is being observed under a microscope, a technology for tracking a cell, and a technology for marking a cell have hitherto been proposed (For example, refer to Japanese Patent Application Laid-open Publication No. 2003-207719 and Japanese Patent No. 2930618). Moreover, by fluorescent observation of biological cells using a microscope, an analysis of chromosome aberration and observation of DNA in the cell is carried out. There are a large number of particles in a cell of a living being. The particles basically move randomly. Further, among the particles, there are some particles which behave in a unique manner which is different from the behavior of other particles. The particles which behave in a unique manner move in a typical manner which is different from the movement of other particles. Detection of the particles which behave in a unique manner has been sought.

However, in a structure which is disclosed in Japanese Patent Application Laid-open Publication No. 2003-207719, a cell which is to be observed is a cell which is to be tracked such that the cell is always in a field of view of observation. Moreover, in a structure which is disclosed in Japanese Patent No. 2930618, marking of a cell is carried out one after the other for a cell which undergoes division repeatedly. With any of these structures, it is not possible to detect particles which behave in a typical manner, in other words particles which move in a typical manner.

The present invention is made in view of the abovementioned circumstances, and an object of the present invention is to provide a particle-group movement analysis system which is capable of detecting an object in a form of a particle which moves in a manner different from the other object in the form of a particle from among a plurality of objects in the form of a particle, a particle-group movement analysis method, and a program.

DISCLOSURE OF THE INVENTION

To solve the problems mentioned above, and to attain an object, according to the present invention, it is possible to provide a particle-group movement analysis system including an image capture means which captures a time-series image of a plurality of objects in a form of a particle,
a characteristic information computing means which calculates characteristic information related to the object in the form of a particle inside each small area corresponding to each pixel in the time-series image which is captured,
a time-change detecting means which detects a time change of the characteristic information,
a factor specifying means which specifies an abnormal area which is an area including the object in the form of a particle which has become a cause of the time change or an abnormal area which is an area near the object in the form of a particle which has become a cause of the time change.

Moreover, according to a preferable aspect of the present invention, the characteristic information is at least one of an amount in the small area of an area in which, the object in the form of a particle is judged to be a result of the image capture, a proportion in the small area, of the area in which, the object in the form of a particle is judged to be the result of the image capture, and
an average number of objects in the form of a particle existing in the small area.

Moreover, according to a preferable aspect of the present invention, the factor specifying means selects the small area which is judged to include the object in the form of a particle which has become the cause of the time change, carries out a predetermined calculation of the time change in a boundary portion which exists in a surrounding portion of the small area which is selected, and specifies the abnormal area by extracting an area which is a cause of the time change greater than the other area, in the small area.

Furthermore, according to a preferable aspect of the present invention, the predetermined calculation of the time change in the boundary portion is adding the time change of the specified area in the small area to the time change of the boundary portion, or adding the time change of the boundary portion to the time change of the specified area in the small area.

According to a preferable aspect of the present invention, at least one of a size, a shape, and an anisotropy of the predetermined small area is let to be variable according to the object in the form of a particle.

Moreover, according to a preferable aspect of the present invention, the object in the form of a particle is a particle in a cell of a living being.

Furthermore, according to a preferable aspect of the present invention, the particle in the cell of the living being which is the object in the form of a particle, performs at least one of a disappearance, an appearance and a changes of a size, in a plurality of different time-series images.

According to a preferable aspect of the present invention, the object in the form of a particle is a person in a crowd in which an unspecified number of persons have gathered.

Moreover, according to a second aspect of the present invention, it is possible to provide a particle-group movement analysis method including

an image capture step of capturing an image of a plurality of objects in a form of a particle,

a characteristic information computing step of computing characteristic information related to an object in the form of a particle in each small area corresponding to each image pixel in the image which is captured,

a time-change detection step of detecting a time change of the characteristic information, and

a factor specification step of specifying an area which includes the object in the form of a particle which has become a cause of the time change, or an abnormal area which is an area near the object in the form of a particle which has become a cause of the time change.

Moreover, according to a preferable aspect of the present invention, the factor specification step further includes an abnormal particle judging step, and normalization is carried out at the abnormal particle judging step.

According to a third aspect of the present invention, it is possible to provide a program for a particle-group movement analysis system which analyzes a movement of an object in a form of a particle, which is readable by a computer, and causes a computer to function as

an image capture means which captures a time series image of a plurality of objects in a form of a particle,

a characteristic information computing means which calculates characteristic information related to the object in the form of a particle inside each small area corresponding to each pixel in the time-series image which is captured,

a time-change detecting means which detects a time-change of the characteristic information, and

a factor specifying means which specifies an abnormal area which is an area including the object in the form of a particle which has become a cause of the time change, or an abnormal area which is an area near the object in the form of a particle.

In the particle-group movement analysis system according to the present invention, the image capture means captures the time-series image of the plurality of objects in the form of a particle. The characteristic information computing means computes the characteristic information related to the object in the form of a particle in each small area corresponding to each image pixel in the time-series image which is captured. The time-change detecting means detects the time-change of the characteristic information. Moreover, the factor specifying means specifies the abnormal area which is an area including the object in the form of a particle which has become the cause of the time change, or the abnormal area which is an area near the object in the form of a particle which has become the cause of the time change. In the structure, from among the plurality of objects in the form of a particle moving in a fixed direction, it is considered that there exists an object in the form of a particle which moves in a manner different than the other objects in the form of a particle. For example, when an amount of particles is used as the characteristic information, the time-change detecting means calculates the divergence of the amount of particles. Moreover, the factor specifying means, according to a predetermined computing process, specifies an abnormal area in which a change in the divergence is even greater. Inside the abnormal area or near the abnormal area, there exists an object in the form of a particle which moves in a manner different from the other objects in the form of a particle. Accordingly, an effect that it is possible to detect from among the plurality of objects in the form of a particle, the object in the form of a particle which moves in a manner different from the other objects in the form of a particle, is shown.

BRIEF DESCRIPTION OF THE DRAWINGS

Fig. 1 is a diagram showing functional blocks of a particle-group movement analysis system according to a first embodiment;
Fig. 2 is a diagram showing an image observed by a microscope unit;
Fig. 3 is a flowchart showing a procedure of a particle-group movement analysis method;
Fig. 4 is a diagram showing a structure of a small area R(i, j);
Fig. 5A is a diagram showing a state before particles move;
Fig. 5B is a diagram showing a state after the particles have moved;
Fig. 6A is a diagram showing a divergence;
Fig. 6B is a diagram showing value after voting;
Fig. 7 is a diagram showing a state in which abnormal particles exist;
Fig. 8A is a diagram showing a divergence when the abnormal particles exist;
Fig. 8B is a diagram showing values after the voting when the abnormal particles exist;
Fig. 9A to Fig. 9C are diagrams showing examples of characteristic information;

Fig. 10 is a diagram showing another structure of the small area R(i, j);

Fig. 11A to Fig. 11E are diagrams showing a linking process;

Fig. 12 is a diagram showing functional blocks of a particle-group movement analysis system according to a second embodiment; and

Fig. 13 is a diagram showing a time-series image observed by a surveillance camera.

BEST MODE FOR CARRYING OUT THE INVENTION

Embodiments of a particle-group movement analysis system, a particle-group movement analysis method, and a program according to the present invention will be described below in detail based on diagrams. However, the present invention is not restricted by these embodiments.

(First embodiment)

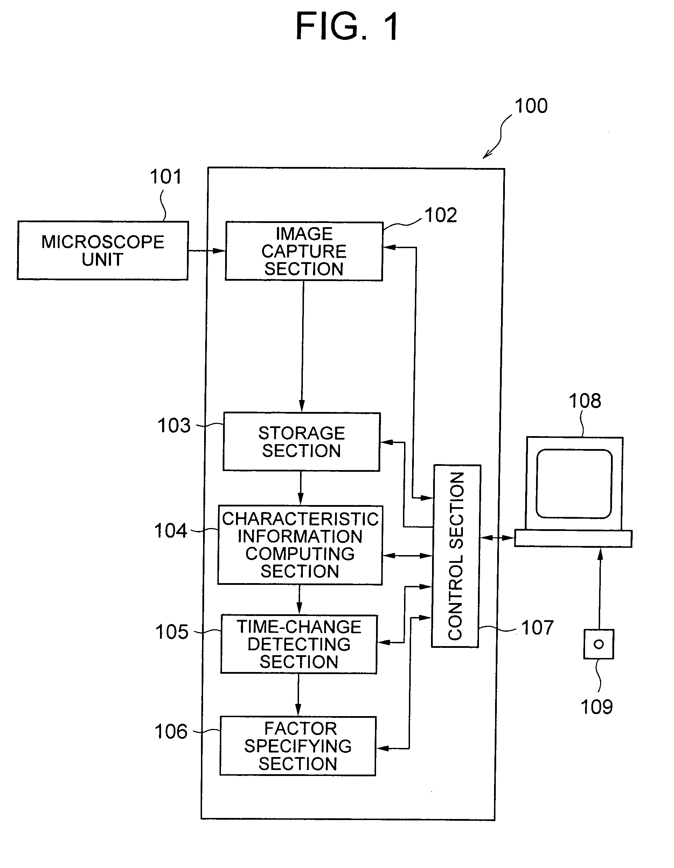

Fig. 1 shows functional blocks of a particle-group movement analysis system 100 according to a first embodiment. A microscope unit 101, for example, is a microscope for fluorescent observation. By the microscope unit 101, it is possible to carry out fluorescent observation of a biological cell. An image capture section 102 captures a time-series image of a plurality of particles in the cell. The time-series image means an image in which a moving object in the form of a particle is captured according to a temporal order.

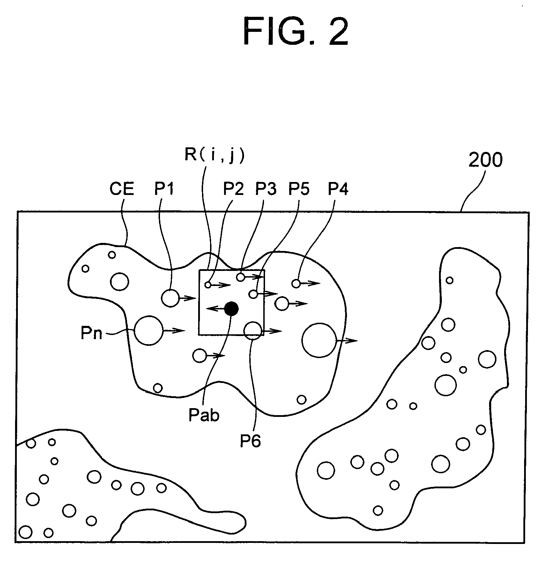

Fig. 2 shows a time-series image 200 which is observed by the microscope unit 101. In the time-series image 200, there exists a plurality of particles P1, P2, ... Pn (hereinafter, called appropriately as 'particles Pn') in a cell CE. The particles Pn correspond to objects in the form of a particle, and are spherical particles of various shapes. Moreover, each particle Pn moves randomly.

The description will be continued coming back to Fig. 1. A storage section 103 stores a plurality of time-series images 200 which are captured by the image capture section 102. A characteristic information computing section 104 calculates characteristic information related to the particles Pn in each small area R(i, j) corresponding to each pixel in the time-series image 200 which is captured. The description will be made below by using an amount (the number) of particles Pn which is an example of the characteristic information. Details of other examples of the 'characteristic information' will be described later.

A time-change detecting section 105 calculates a time change of the amount of particles Pn, such as a divergence. A factor specifying section 106 specifies an abnormal area which is an area including particles Pn, which has become a cause of a change of the divergence, or an abnormal area which is an area near the area which includes the particles Pn. A control section 107 controls the entire system. Moreover, a computer 108 performs processes such as an input and output control, a computation process, and a display process of a time-series image and an analysis result.

As a computer program for the hardware of the particle-group movement analysis system 100, it is desirable to use a program which is a program for the particle-group movement analysis system which analyzes a movement of an object in the form of a particle, and which is a program readable by a computer, and which causes the computer to function as

an image capture means which captures a time-series image of a plurality of objects in the form of a particle,

a characteristic information computing means which calculates characteristic information related to the object in the form of a particle inside each small area corresponding to each pixel in the time series image which is captured,

a time-change detecting means which detects a time-change of the characteristic information, and

a factor specifying means which specifies an abnormal area which is an area including the object in the form of a particle which has become a cause of the time change, or an abnormal area which is an area near the object in the form of a particle.

It is possible to realize the functions of the characteristic information computing section 104, the time-change detecting section 105, and the factor specifying section 106 by using a CPU. It is also possible to realize the functions of the characteristic information computing section 104, the time-change detecting section 105, and the factor specifying section 106 by causing the computer 108 to read a program from information storage medium 109.

Moreover, as the information storage medium 109, it is possible to use various media which can be read by a computer, such as a flexible disc, a CD-ROM, a magneto-optical disc, an IC card, a ROM cartridge, a printed matter in which codes are printed, such as a punch card and a bar code, an internal storage memory unit of a computer (memory such as a RAM and a ROM), and an external storage memory unit of a computer. Even though a mode of reading of this PROGRAM is a contact mode, it may also be a non-contact mode.

Furthermore, instead of the information storage medium 109, it is also possible to realize each function mentioned above by downloading a PROGRAM for realizing each function mentioned above from a host device via a transmission line.

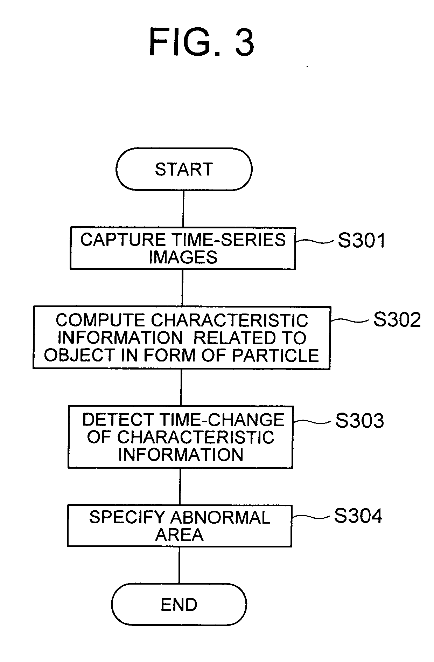

Fig. 3 is a flowchart showing a procedure of a particle-group analysis. In step 301, an image capture section 102 captures a time-series image of a cell CE which includes a plurality of particles Pn. The storage section 103 stores a plurality of time-series images which are captured. In step S302, the characteristic information computing section 104 calculates characteristic information based on a plurality of time-series images 200. In step S303, the time-change detecting section 105 detects a time change of the characteristic information, such as a divergence. In step 5304, the factor specifying section 106 specifies an abnormal area which is an area including particles Pn, which has become a cause of a change of the divergence, or an abnormal area which is an area near the area which includes the particles Pn.

Next, the analysis procedure by the particle-group movement analysis system 100 will be described based on concrete examples. To start with, in the time-series image 200 shown in Fig. 2, an area to be detected is set. The area to be detected is an area of analyzing a movement of the particles Pn. Next, the area to be detected is divided into pixels I (i, j) in the form of an orthogonal lattice. Further, a predetermined small area R(i, j) is determined for each pixel I (i, j) in the area in the image, which is to be detected. Moreover, same number of voting boxes V(i, j) as the number of pixels in the area to be detected are prepared. An attention is focused on any one pixel I(i, j), and this pixel I(i, j) is called appropriately as a 'target pixel I(i, j)'. The target pixel I(i, j) corresponds to a specified area.

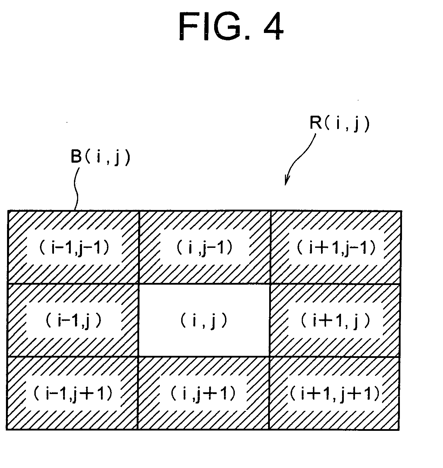

Fig. 4 shows the small area R (i, j). The small area R (i, j) is a square area of a size of 3 pixels x 3 pixels, with the target pixel I (i, j) let to be a center. Moreover, in Fig. 4, eight pixels along a circumference, adj acent to the target pixel I (i, j) are called as a boundary portion B (i, j) shown by oblique lines.

(Description of divergence $\Delta S(i, j)$)

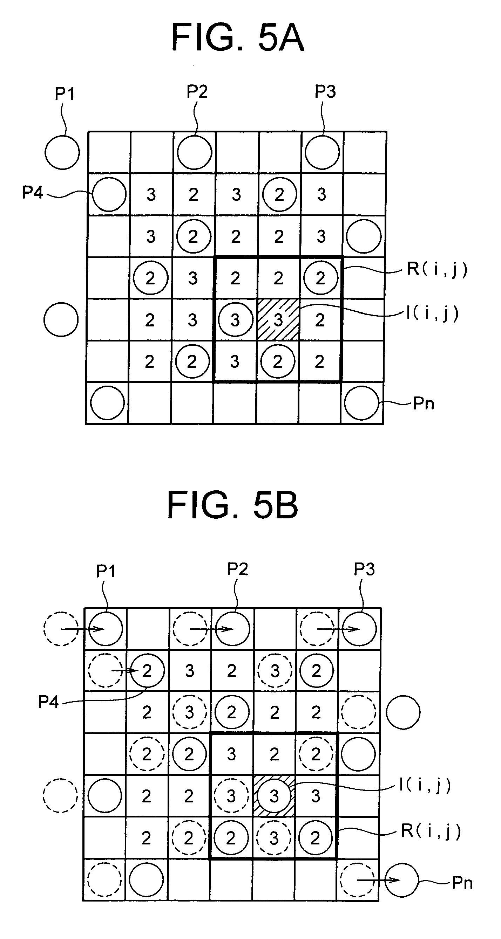

Fig. 5A shows a relationship of the particles Pn and the pixel I (i, j) in the area to be detected. Hereinafter, for the simplifying, all the particles Pn are described as circular shaped having the same size. In Fig. 5A, a number '3' which is entered in the target pixel I (i, j) which is shown by oblique lines shows a sum total of the amount of particles Pn which exist in the small area R(i, j).

Fig. 5B shows a relationship of the particles Pn and the pixel I (i, j) in the area to be detected, in a stationary state when all the particles Pn move by an amount equivalent to one pixel in a right direction as shown by arrows in Fig. 5B. The 'stationary state' means a state in which there is no increase or decrease in the amount of particles Pn in the area to be detected. In other words, for example, the stationary state means a state in which a plurality of particles Pn move randomly, or a state in which all the particles Pn always move in a fix direction. Moreover, a state different from the 'stationary state', for example particles which move in a manner different from the other particles is called as 'abnormal particles'. For ease of understanding, an arrow is assigned to particles P1 to P4 from among the plurality of particles Pn, and the arrow is omitted for the other particles.

In Fig. 5B, attention is focused on the target pixel I (i, j) which is shown by oblique lines similarly as in Fig. 5A. Further, a sum total value of the amount of particles Pn which exist in the small area R (i, j) corresponding to the target pixel I (i, j) is calculated. For example, regarding the target pixel I (i, j), the sum total value of the number of pixels which exist in the small area R(i, j) is '3'.

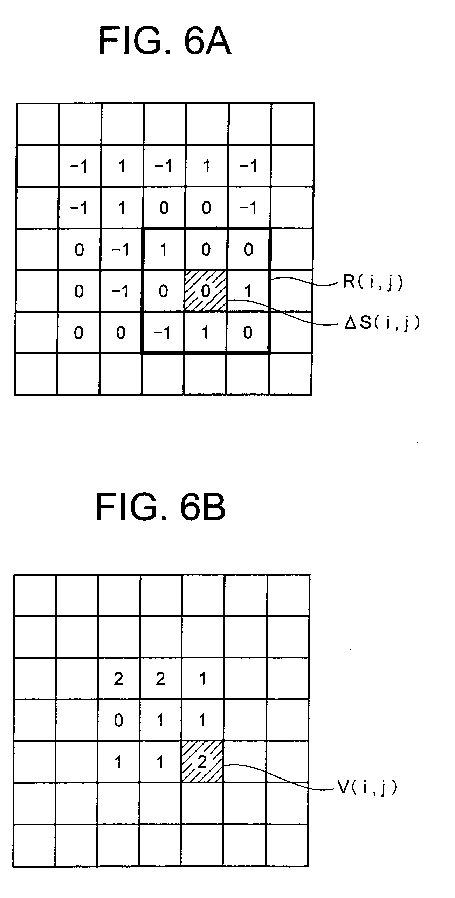

Fig. 6A shows a divergence $\Delta S (i, j)$ for the target pixel I (i, j). The divergence $\Delta S (i, j)$ is a value which is obtained by subtracting a sum total value of the number of particles in the small area R (i, j) before the particles Pn move, from a sum total value of the number of particles in the small area R(i, j) after the particles Pn have moved. The divergence $\Delta S(i, j)$ corresponds to the time change.

For example, divergence $\Delta S (i, j)$ of the target pixel I (i, j) is shown by the following expression.

$$\Delta S(i, j) = 3 \text{ (after moving)} - 3 \text{ (before moving)}$$
$$= 0$$

A minus sign of the divergence $\Delta S(i, j)$ shows that the sum total has decreased before moving. Moreover, a plus sign of the divergence $\Delta S (i, j)$ shows that the sum total has increased after moving.

Further preferably, it is desirable to take a time-average of a plurality of divergence $\Delta S(i, j)$. Accordingly, it is possible to reduce an effect of a noise. (Description of boundary voting)

Next, a voting of divergence $\Delta S (i, j)$ of the target pixel I (i, j) is carried out for each pixel in the boundary portion B (i, j), by a procedure shown in the following expressions (1) to (8). However, a voting box before voting of divergence $\Delta S (i, j)$ is let to be V'(i, j). The 'voting' corresponds to a procedure of calculating a predetermined two-dimensional histogram related to the characteristic information.

$$V(i - 1, j - 1) = V'(i - 1, j - 1) + \Delta S(i, j) \quad \dots (1)$$

```
V(i, j - 1)        = V'(i, j -1)        + ΔS(i, j) ... (2)

V(i + 1, j - 1) = V'(i + 1, j - 1) + ΔS(i, j) ... (3)

V(i + 1, j)        = V'(i + 1, j)        + ΔS(i, j) ... (4)

V(i + 1, j + 1) = V'(i + 1, j + 1) + ΔS(i, j) ... (5)

V(i, j + 1)        = V'(i, j + 1)        + ΔS(i, j) ... (6)

V(i - 1, j + 1) = V'(i - 1, j + 1) + ΔS(i, j) ... (7)

V(i - 1, j)        = V'(i - 1, j)        + ΔS(i, j) ... (8)
```

An addition shown in the abovementioned expressions (1) to (8) is performed for each pixel in the boundary portion B (i, j) shown by oblique lines in Fig. 4. Accordingly, in Fig. 4, a clockwise voting is performed for each pixel in the boundary portion B(i, j). Moreover, the voting shown in the abovementioned expressions (1) to (8) is performed for all pixels in the area to be detected.

A value of a new voting box V(i, j) after the voting shown in the abovementioned expressions (1) to (8) is performed for all pixels is shown in the following expression (9).

```
V(i, j) = ΔS(i - 1, j - 1) + ΔS(i, j - 1)

          + ΔS(i + 1, j - 1)

          + ΔS(i + 1, j)

          + ΔS(i + 1, j + 1) + ΔS(i, j + 1)

          + ΔS(i - 1, j + 1)

          + ΔS(i - 1, j) ... (9)
```

For achieving the voting box V (i, j) finally, any of the following calculation methods (A) and (B) may be used.

(A) A method of voting the divergence ΔS(i, j) to the boundary portion B(i, j) according to the abovementioned expressions (1) to (8) (hereinafter called as 'positive voting').
(B) A method of calculating the voting box V(i, j) after calculating the divergence ΔS(i, j) for all the pixels, according to the abovementioned expression (9) (hereinafter called as 'reverse voting').

In the positive voting, there is an advantage that a memory capacity required for calculation is small and favorable.

Fig. 6B, for example, shows a result of the voting box V(i, j) obtained by the reverse voting. As shown in Fig. 5B, all the particles Pn are in a stationary state, and move in a fix direction, which is a right direction in this example. Therefore, a value of the voting box V(i, j) is of a magnitude in a fix range of 0 to 2.

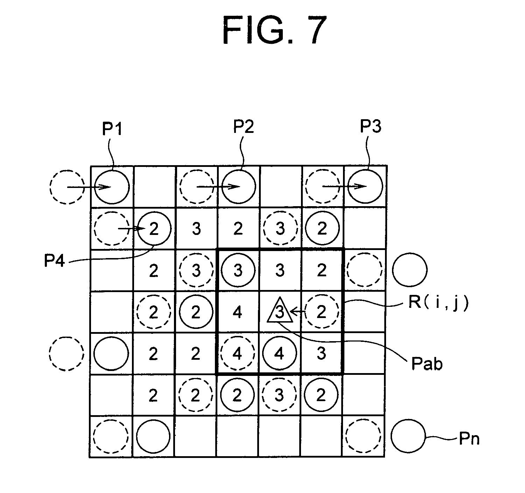

Next, a case in which there exists an abnormal particle which move in a manner different from the other particles will be described below. Fig. 7 shows a relationship of the particles Pn and the pixel I (i, j) in the area to be detected when the abnormal particles Pab exist. In Fig. 7, the other particles Pn excluding the abnormal particle Pab move by an amount of only one pixel in the right direction as shown by arrows. Whereas, the abnormal particle Pab shown by a triangle.

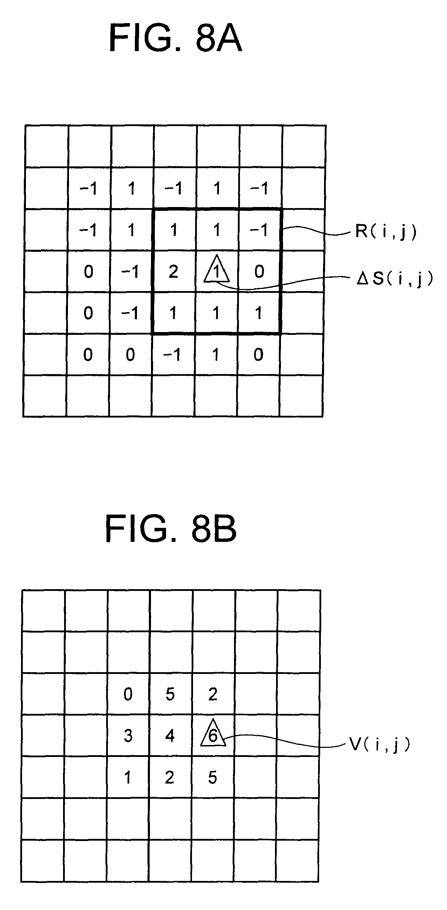

Fig. 8A shows a result when the divergence $\Delta S(i, j)$ in one pixel in which the abnormal particle Pab exists is calculated. Moreover, Fig. 8B, for example, shows a value of the voting box V(i, j) obtained by a reverse projection. As it is evident from Fig. 8B, in a pixel in which the abnormal particle Pab exists, the value (= 6) of the voting box V(i, j) is remarkably higher than the value of the voting box V(i, j) in the other pixel. As a result, it is possible to detect the small area R(i, j) which includes the abnormal particle Pab, based on the value of the voting box V(i, j).

In a microscopic observation, particularly in a microscopic observation by a confocal microscope, as the particles move vertically in a direction of focal depth, in many cases, it performs at least one of a disappearance, an appearance and a change of the size. In this embodiment, it is possible to detect with high sensitivity, the particles which move in such manner.

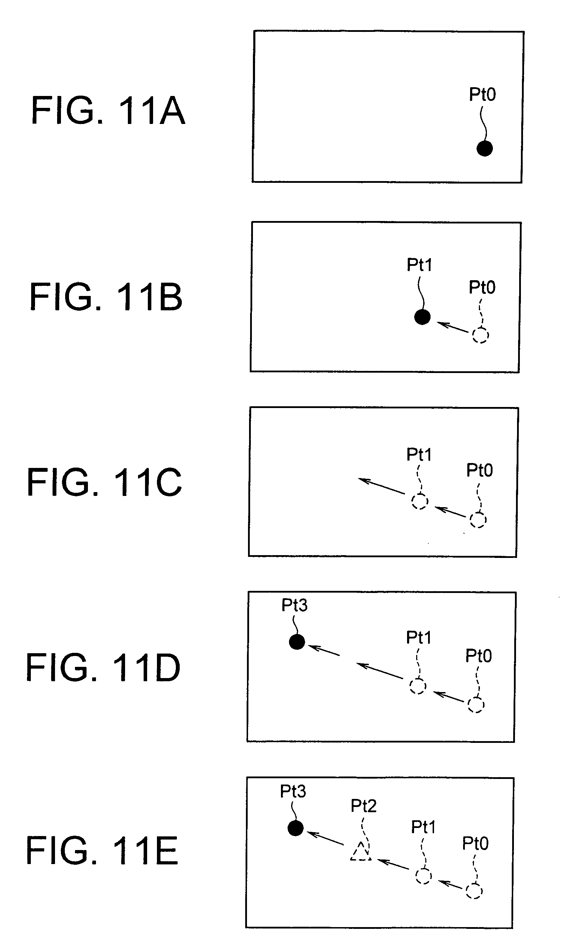

Particularly, in any of the plurality of time-series pixels, when the particle Pn which is a focus of attention disappears, it is desirable to perform a so-called linking process. Fig. 11A to Fig. 11E are diagrams describing the linking process. Fig. 11A shows a particle Pt0 of which an image is captured at a time t0 by a black circle. Fig. 11B shows a particle Pt1 of which an image is captured at a time t1, by a black circle. Moreover, in Fig. 11C, the particle has disappeared at a time t2. Furthermore, in Fig. 11D, a particle Pt3 has appeared again at a time t3 as shown by a black circle. At this time, as shown in Fig. 11E, a position at the time t2 where the detection of the particle Pt2 (shown by a dashed-line triangle) is uncertain is estimated upon interpolation. In this manner, it is possible to identify by time interpolation that it is the same particle. Accordingly, even when the particle disappears suddenly, it is possible to detect with high sensitivity the abnormal particle.

Moreover, a size of the small area R(i, j) is not restricted to a square shape of 3 pixels x 3 pixels. For example, it is possible to let to be variable at least one of a size, a shape, and an anisotropy of the small area R (i, j) according to a size, the amount, an existence density, a traveling-speed vector distribution, and a maximum value of a shift per unit time of the particle Pn. Accordingly, it is possible to detect the abnormal particle, with high sensitivity under optimized conditions. Moreover, in a real-time process, the size the shape, and the anisotropy of the small area R (i, j) may be changed based on a process result of a previous frame. The 'anisotropy' means that the target pixel I (i, j) is set at a position shifted from a central position of the small area R(i, j). For example, it is a case in which, for a rectangular-shaped small area R (i, j), the target pixel I(i, j) exists near a short side of the rectangle.

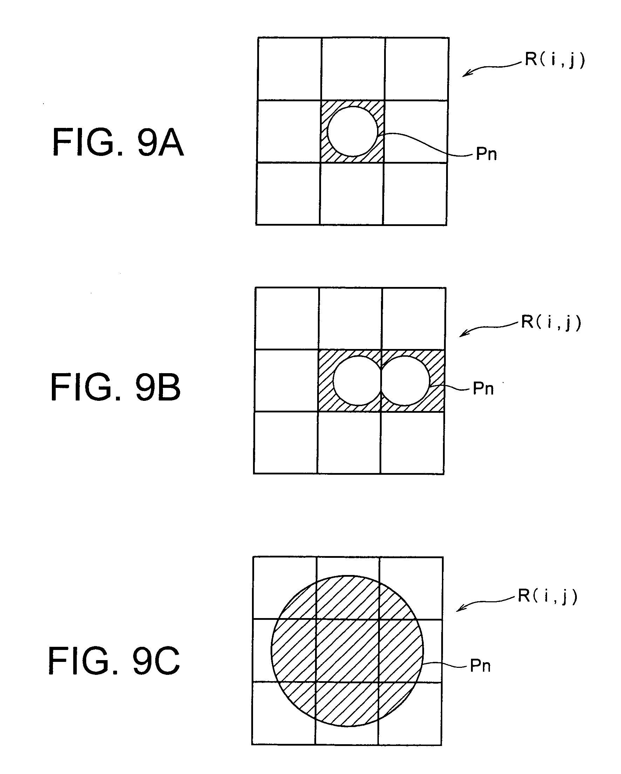

In the abovementioned description, an example of counting an amount of one particle Pn at a time is used. The counting of the particles Pn will be described concretely. First of all, a cell illuminated by fluorescent light is binarized (threshold processing) by brightness. A labeling process is performed for an image which is binarized. Accordingly, an isolated area is detected, and an amount of the isolated area is counted. For example, as shown in Fig. 9A, when the particles Pn are isolated, the amount of the isolated area corresponds to the amount of pixels.

Moreover, as shown in Fig. 9B, two particles may come close, and may overlap. In this case, two pixels shown by oblique lines correspond to the isolated area. Furthermore, it is also possible to perform a matching process with an image of a sample of the particles Pn as a template. In this case, a peak of a similarity of results of the matching process is counted. Furthermore, for example, as shown in Fig. 9C, one particle Pn may be of a size of a plurality of pixels. In this case, firstly, a cell which is illuminated by fluorescent light is binarized by brightness. Next, an area greater than the threshold value in the small area R(i, j) is counted. Further, a proportion of an area of the particle Pn for the small area R (i, j) is let to be the characteristic information.

Moreover, another example of the characteristic information will be described. In a case of a cell illuminated by the fluorescent light, a similarity of a result of the matching process by a value of brightness of the particle in each pixel, as it is, or the abovementioned template is calculated. Next, the brightness or the similarity which is calculated is integrated in the small area R(i, j). Further, the integrated value is divided by an average magnitude (size) of the particle Pn. The result of the division can be used as the characteristic information.

According to this embodiment, by setting the small area R(i, j) (= detection filter), and by performing the positive projection and the reverse projection with the divergence $\Delta S (i, j)$, it is possible to detect with high sensitivity the abnormal particle Pab which moves in a manner different from the other particles Pn. In this embodiment, the boundary portion B (i, j) is set at an inner side of the small area R(i, j).

However, without restricting to this, it is also possible to let a structure to be one of a structure in which the boundary portion B(i, j) is set at an outer side of the small area R(i, j), and a structure in which the boundary portion B(i, j) is spread over a half of a pixel on the outer side and the inner side of the small area R(i, j).

(Modified embodiment of first embodiment)

Next, a modified embodiment of the first embodiment mentioned above will be described below. In the first embodiment mentioned above, the eight pixels adjacent to the target pixel I(i, j) are let to be the boundary portion B(i, j). Whereas, in this modified embodiment, 16 pixels which are isolated from the target pixel I (i, j) are let to be the boundary portion B(i, j).

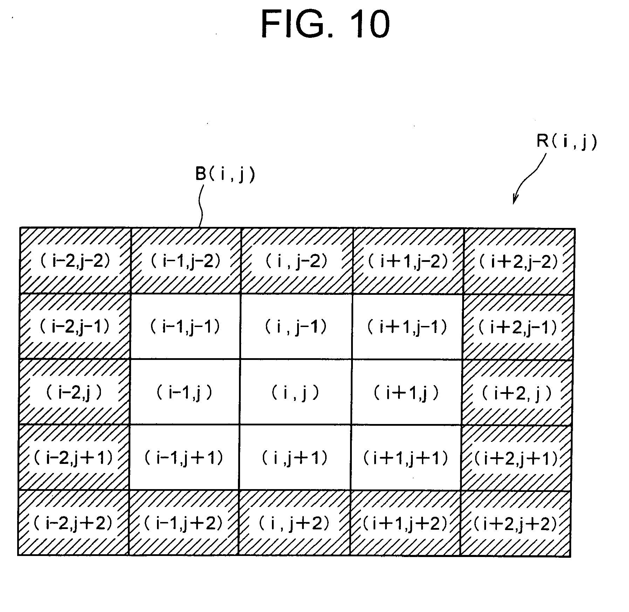

Fig. 10 shows the small area R(i, j) in this modified embodiment. The small area R(i, j) is a square area of a size 5 pixels x 5 pixels with the target pixel I(i, j) as a center. Moreover, the boundary portion B(i, j), as shown by oblique lines in Fig. 10, is 16 pixels which are isolated from the target pixel I(i, j).
Divergence ΔS(i, j) about the target pixel I(i, j) is calculated in the same manner as the first embodiment. Divergence ΔS(i, j) is a value obtained by subtracting a sum total value of the number of particles in the small area R(i, j) before the particle Pn move, from a sum total value of the number of particles in the small area R (i, j) after the particles Pn have moved.
Next, a voting of divergence ΔS (i, j) of the target pixel I(i, j) is performed from each pixel in the boundary portion B(i, j), by a procedure shown in the following expression (10) to (25). However, the voting box before voting the divergence ΔS(i, j) is let to be V'(i, j).

$$V(i - 2, j - 2) = V'(i - 2, j - 2) + \Delta S(i, j) \quad \ldots \quad (10)$$

$$V(i - 1, j - 2) = V'(i - 1, j - 2) + \Delta S(i, j) \quad \ldots \quad (11)$$

$$V(i, j - 2) \quad = V'(i, j - 2) \quad + \Delta S(i, j) \quad \ldots \quad (12)$$

$$V(i + 1, j - 2) = V'(i + 1, j - 2) + \Delta S(i, j) \quad \ldots \quad (13)$$

$$V(i + 2, j - 2) = V'(i + 2, j - 2) + \Delta S(i, j) \quad \ldots \quad (14)$$

$$V(i + 2, j - 1) = V'(i + 2, j - 1) + \Delta S(i, j) \quad \ldots \quad (15)$$

$$V(i + 2, j) \quad = V'(i + 2, j) \quad + \Delta S(i, j) \quad \ldots \quad (16)$$

$$V(i + 2, j + 1) = V'(i + 2, j + 1) + \Delta S(i, j) \quad \ldots \quad (17)$$

$$V(i + 2, j + 2) = V'(i + 2, j + 2) + \Delta S(i, j) \quad \ldots \quad (18)$$

$$V(i + 1, j + 2) = V'(i + 1, j + 2) + \Delta S(i, j) \quad \ldots \quad (19)$$

$$V(i, j + 2) = V'(i, j + 2) + \Delta S(i, j) \quad \dots (20)$$

$$V(i - 1, j + 2) = V'(i - 1, j + 2) + \Delta S(i, j) \quad \dots (21)$$

$$V(i - 2, j + 2) = V'(i - 2, j + 2) + \Delta S(i, j) \quad \dots (22)$$

$$V(i - 2, j + 1) = V'(i - 2, j + 1) + \Delta S(i, j) \quad \dots (23)$$

$$V(i - 2, j) = V'(i - 2, j) + \Delta S(i, j) \quad \dots (24)$$

$$V(i - 2, j - 1) = V'(i - 2, j - 1) + \Delta S(i, j) \quad \dots (25)$$

An addition shown in the abovementioned expressions (10) to (25) is performed for each pixel in the boundary portion B (i, j) shown in Fig. 10. Accordingly, in Fig. 10, a clockwise voting is performed for each pixel in the boundary portion B(i, j). Moreover, the voting shown in the abovementioned expressions (10) to (25) is performed for all pixels in the area to be detected.

A value of a new voting box V(i, j) after the voting shown in the abovementioned expressions (10) to (25) is performed for all pixels is shown in the following expression (26).

$$V(i, j) = \Delta S(i - 2, j - 2) + \Delta S(i - 1, j - 2)$$

$$+ \Delta S(i, j - 2)$$

$$+ \Delta S(i + 1, j - 2) + \Delta S(i + 2, j - 2)$$

$$+ \Delta S(i + 2, j - 1) + \Delta S(i + 2, j)$$

$$+ \Delta S(i + 2, j + 1)$$

$$+ \Delta S(i + 2, j + 2) + \Delta S(i + 1, j + 2)$$

$$+ \Delta S(i, j + 2)$$

$$+ \Delta S(i - 1, j + 2) + \Delta S(i - 2, j + 2)$$

$$+ \Delta S(i - 2, j + 1) + \Delta S(i - 2, j)$$

$$+ \Delta S(i - 2, j - 1) \quad \dots (26)$$

In this manner, in this modified embodiment also, for achieving the voting box V (i, j) finally, any of the procedures from the positive voting and the reverse voting may be used similarly as in the first embodiment mentioned above.

(Second embodiment)

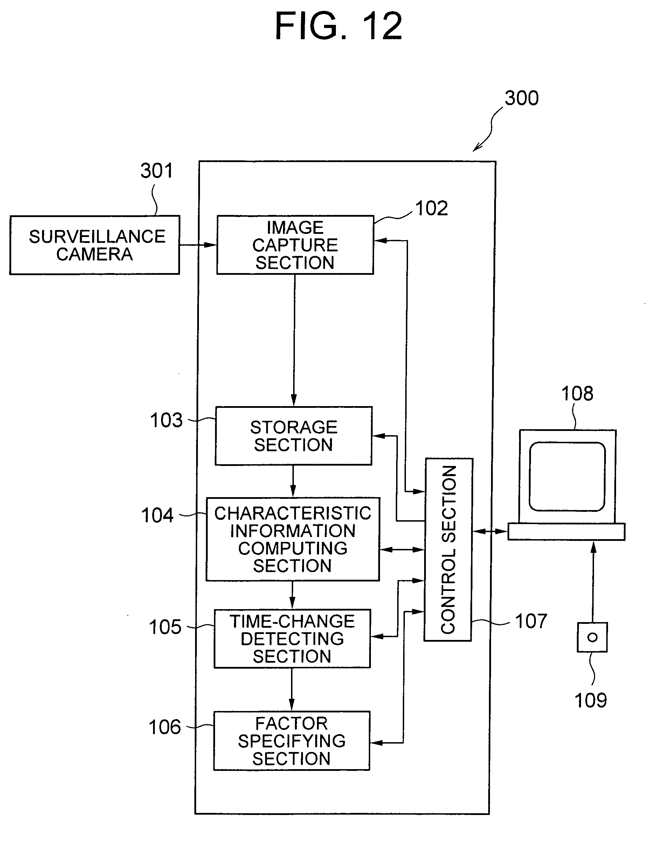

Fig. 12 shows functional blocks of a particle-group movement analysis system 300 according to a second embodiment of the present invention. In the first embodiment, the fluorescent observation of a biological cell is carried out by a microscope unit. Whereas, in this embodiment, a point that a person in a group is let to be an obj ect in the form of a particle is different. Same reference numerals are assigned to components same as in the first embodiment, and the description to be repeated is omitted.

A surveillance camera 301 is installed at locations where an unspecified large number of people are gathered, such as a railway station, an airport, and public facilities. Moreover, the surveillance camera 301 monitors persons in a crowd in a railway station. An image capture section 102 captures a time-series image of the crowd. Furthermore, in Fig. 12, the surveillance camera 301 and the image capture section 102 are shown separately. However, a structure can also be let to be such that the surveillance camera 301 includes the image capture section 102.

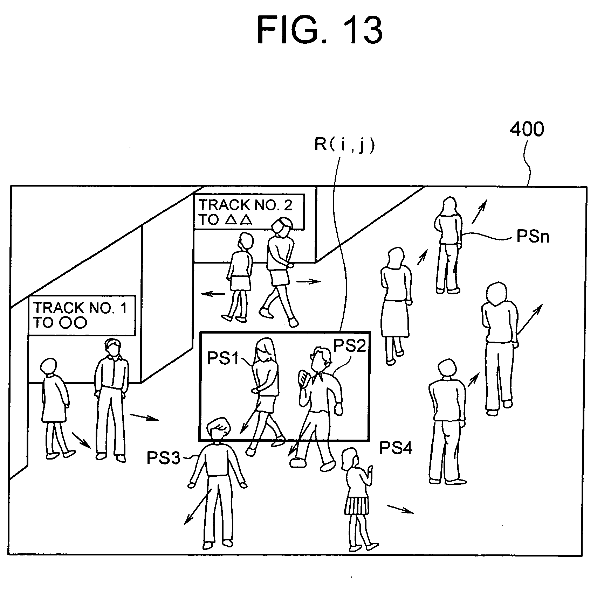

Fig. 13 shows a time-series image 400. A plurality of persons PS1, PS2 ... PSn (hereinafter, called appropriately as 'persons PSn') exists in a field of view of which an image is captured by the surveillance camera 301. The persons PS1, PS2 ... PSn are walking in directions shown by arrows.

The particle-group movement analysis system 300 is capable of detecting a person who moves in a manner different from the other persons, in other words a person who makes an abnormal behavior, by a procedure similar to a movement analysis procedure mentioned in the first embodiment.

Moreover, by increasing an area of the small area R(i, j), it is possible to detect the time change of a basic flow of persons in the crowd. Accordingly, it is possible to carry out an analysis of a crowd behavior which is useful for dealing with congestion in a railway station.

Moreover, in this embodiment, shapes and sizes of heads and hair of the persons PSn is roughly fixed. Consequently, it is also possible to take sample images of the head and hair of the persons PSn as templates. Moreover, by using the templates, the matching process is performed. Accordingly, it is possible to identify the person PSn. After the specific person PSn is identified, it is also possible to track the person PSn who has been identified.

According to this embodiment, it is possible to detect a person who moves in a manner different from the other persons in the crowd. Moreover, as it has been mentioned above, by detecting the basic flow of persons, it is possible to provide information useful for an efficient positioning of guards in a railway station premises.

(Third embodiment)

Next, a third embodiment of the present invention will be described. In the embodiments described above, in the pixel in which the abnormal particle Pab exists, the value of the voting box V(i, j) is remarkably higher than the value of the voting box V (i, j) in the other pixels. Accordingly, based on the value of the voting box V(i, j), it is possible to detect the small area R(i, j) which includes the abnormal particle Pab.

Here, by handling the value of the voting box V(i, j) as an absolute value, for example, when a judgment can be made that it is a state in which the abnormal particle exists when the maximum value is close to 1, and it is a state of just a noise when the maximum value is not close to 1, a convenience is improved further.

Therefore, in this embodiment, a step of normalization is further included. Moreover, in this embodiment, the shape of the small area R (i, j) is not at all restricted to a temporal factor, and it is possible to set the small areas of various shapes and sizes.

The following expression (27) shows a proportion of the particles existing in the small area R (i, j) . As it has been mentioned above, it is possible to let the shape of the small area R(i, j) to be an arbitrary shape. Therefore, the description will be made by using an arbitrary position (x, y) instead of coordinates (i, j).

A proportion p(x, y, t) of the particle existing in the small area (x, y) at time t, at a position (x, y) is expressed as the following expression (27)

$$\rho(x,y,t) \equiv \int P(x'-x, y'-y, t) R(x', y') dx' dy' = (P * R) \quad \ldots \quad (27)$$

Here, P(x, y, t) is a probability function ($0 \le P \le 1$). P(x, y, t) corresponds to image data.

Moreover, an amount n(x, y, t) of particles which exist in the small area R(x, y) can be expressed by the following expression (28).

$$n(x,y,t) = \frac{\rho(x,y,t)}{\rho_0} \quad \ldots \quad (28)$$

Here, $\rho_0$ is an average value of a proportion of one particle in the small area R (x, y). For example, at the time of searching for a particle in which an area of one particle is 2 pixels x 2 pixels,

$$\rho_0 = 2 \times 2 = 4.$$

Moreover, a change in the number of particles in the small area R (x, y) can be expressed by the following expression (29). K(x, y, t) corresponds to the diversion $\Delta$S(x, y, t) in the embodiments described above.

$$K(x,y,t) = \frac{\partial n(x,y,t)}{\partial t} \quad \ldots \quad (29)$$

In the expression (29), when K = 0, a stationary state is assumed. Whereas, when K ≠ 0, there exists K number of abnormal particles in the small area (x, y). Moreover, according to a theory of divergence, it can be said that something is happening at a boundary of the small area R (x, y) when K ≠ 0. However, an accurate position of a boundary pixel associated with K ≠ 0 is not known.

Therefore, in this embodiment, a function M (x, y) in which the normalization has been performed, as shown in expression (30) is to be used.

$$M(x,y) = \frac{\|\nabla R(x,y)\|}{\iint \|\nabla R(x,y)\| dxdy} \quad \ldots \quad (30)$$

The function M has a predetermined value at a position at which the voting is performed, or at a position at which the voting is to be performed. Whereas, at a position where voting is not to be done, it is zero. Moreover, when a target-pixel position · time is let to be (x', y', t') for example, there is a tendency that any of the K (x', y', t') number of abnormal particles exist at a specific position · time (x'+x, y'+y, t'). Moreover, when the small area R is increased, a value of the function M is decreased.

Moreover, the average number U of the abnormal particles which exist at a time t at a position (x, y) can be expressed by the following expression (31).

$$U(x,y,t) = \int K(x',y',t)M(x-x',y-y')dx'dy' = (K*M) \quad \ldots \quad (31)$$

The expression (31) corresponds to the procedure of positive voting mentioned above. Inventors of the present invention have been carrying out experiments of image processing by an algorithm described in this embodiment, on video images obtained by a confocal microscope. Seven images at times t1 to t7 including one abnormal particle are used. From an original image of 512 pixels x 512 pixels of particles, an image area of 120 pixels x 120 pixels is extracted. A size of the small area R (i, j) is let to be 5 pixels x 5 pixels. Moreover, weight in the small area R(i, j) is 1/25 for each pixel.

When a comparison is made only at the time of calculating K, and when calculation of U is further made, it is possible to identify more clearly a trajectory of the abnormal particle, and also to reduce noise. When a CPU of 1.1 GHz was used, the time taken for this image processing was about five seconds.

According to this embodiment, it is possible to judge the existence of the abnormal particle by the absolute value, and also to reduce the noise.

Moreover, the present invention can have various modified embodiments in a range of basic teachings herein set forth.

INDUSTRIAL APPLICABILITY

As it has been described above, a particle-group movement analysis system according to the present invention is useful at the time of detecting a movement of particles in a cell, and movement of persons in a crowd, particularly a movement which is different from that of others.

**Claims**

1. A particle-group movement analysis system comprising:

    an image capture means which captures a time-series image of a plurality of objects in a form of a particle;
    a characteristic information computing means which calculates characteristic information related to the object in the form of a particle inside each small area corresponding to each pixel in the time-series image which is captured;
    a time-change detecting means which detects a time change of the characteristic information; and
    a factor specifying means which specifies an abnormal area which is an area including the object in the form of a particle which has become a cause of the time change, or an abnormal area which is an area near the object in the form of a particle which has become a cause of the time change.

2. The particle-group movement analysis system according to claim 1, wherein
    the characteristic information is at least one of
    an amount in the small area of an area in which, the object in the form of a particle is judged to be a result of the image capture,
    a proportion in the small area, of the area in which, the object in the form of a particle is judged to be the result of the image capture, and
    an average number of objects in the form of a particle existing in the small area.

3. The particle-group movement analysis system according to claim 1 or 2, wherein
    the factor specifying means
    selects the small area which is judged to include the object in the form of a particle which has become the cause of the time change,
    carries out a predetermined calculation of the time change in a boundary portion which exists in a surrounding portion of the small area which is selected, and
    specifies the abnormal area by extracting an area which is a cause of the time change greater than the other area, in the small area.

4. The particle-group movement analysis system according to claim 3, wherein
    the predetermined calculation of the time change in the boundary portion is adding the time change of the specified area in the small area to the time change of the boundary portion, or adding the time change of the boundary portion to the time change of the specified area in the small area.

5. The particle-group movement analysis system according to one of claims 1 to 4, wherein
    at least one of a size, a shape, and an anisotropy of the predetermined small area is let to be variable according to the object in the form of a particle.

6. The particle-group movement analysis system according to one of claims 1 to 5, wherein
    the object in the form of a particle is a particle in a cell of a living being.

7. The particle-group movement analysis system according to claim 6, wherein
    the particle in the cell of the living being which is the object in the form of a particle performs at least one of a disappearance, an appearance and a changes of a size, in a plurality of different time-series images.

8. The particle-group movement analysis system according to one of claims 1 to 5, wherein
    the object in the form of a particle is a person in a crowd in which an unspecified number of persons have gathered.

9. A particle-group movement analysis method comprising:

an image capture step of capturing an image of a plurality of objects in a form of a particle;

a characteristic information computing step of computing characteristic information related to an object in the form of a particle in each small area corresponding to each image pixel in the time-series image which is captured;

a time-change detection step of detecting a time change of the characteristic information; and

a factor specification step of specifying an abnormal area which is an area including the object in the form of a particle which has become a cause of the time change, or an abnormal area which is an area near the object in the form of a particle which has become a cause of the time change.

10. The particle-group movement analysis method according to claim 9, wherein

the factor specification step further includes an abnormal particle judging step, and

a normalization is carried out at the abnormal particle judging step.

11. A PROGRAM for a particle-group movement analysis system which analyzes a movement of an object in a form of a particle, which is readable by a computer, and causes the computer to function as:

an image capture means which captures a time-series image of a plurality of objects in a form of a particle;

a characteristic information computing means which calculates characteristic information related to the object in the form of a particle inside each small area corresponding to each pixel in the time-series image which is captured;

a time-change detecting means which detects a time-change of the characteristic information; and

a factor specifying means which specifies an abnormal area which is an area including the object in the form of a particle which has become a cause of the time change, or an abnormal area which is an area near the object in the form of a particle.

# FIG. 1

# FIG. 2

# FIG. 3

```
        ┌─────────────┐
        │    START    │
        └─────────────┘
               │
    ┌──────────────────────┐
    │ CAPTURE TIME-SERIES  │──── S301
    │       IMAGES         │
    └──────────────────────┘
               │
  ┌──────────────────────────┐
  │ COMPUTE CHARACTERISTIC   │──── S302
  │ INFORMATION  RELATED TO  │
  │ OBJECT IN FORM OF PARTICLE│
  └──────────────────────────┘
               │
   ┌───────────────────────┐
   │ DETECT TIME-CHANGE    │──── S303
   │ OF CHARACTERISTIC     │
   │     INFORMATION       │
   └───────────────────────┘
               │
   ┌───────────────────────┐
   │ SPECIFY ABNORMAL      │──── S304
   │       AREA            │
   └───────────────────────┘
               │
        ┌─────────────┐
        │     END     │
        └─────────────┘
```

# FIG. 4

R(i,j)

B(i,j)

| (i-1,j-1) | (i,j-1) | (i+1,j-1) |
|-----------|---------|-----------|
| (i-1,j) | (i,j) | (i+1,j) |
| (i-1,j+1) | (i,j+1) | (i+1,j+1) |

# FIG. 5A

# FIG. 5B

# FIG. 6A

| | | | | | | |
|---|---|---|---|---|---|---|
| | −1 | 1 | −1 | 1 | −1 | |
| | −1 | 1 | 0 | 0 | −1 | |
| | 0 | −1 | 1 | 0 | 0 | |
| | 0 | −1 | 0 | 0 | 1 | |
| | 0 | 0 | −1 | 1 | 0 | |
| | | | | | | |

R(i,j)

ΔS(i,j)

# FIG. 6B

| | | | | | | |
|---|---|---|---|---|---|---|
| | | | | | | |
| | | 2 | 2 | 1 | | |
| | | 0 | 1 | 1 | | |
| | | 1 | 1 | 2 | | |
| | | | | | | |
| | | | | | | |

V(i,j)

# FIG. 7

# FIG. 8A

| | | | | | | |
|---|---|---|---|---|---|---|
| | −1 | 1 | −1 | 1 | −1 | |
| | −1 | 1 | 1 | 1 | −1 | |
| | 0 | −1 | 2 | △1 | 0 | |
| | 0 | −1 | 1 | 1 | 1 | |
| | 0 | 0 | −1 | 1 | 0 | |
| | | | | | | |

R(i,j)

△S(i,j)

# FIG. 8B

| | | | | | | |
|---|---|---|---|---|---|---|
| | | | | | | |
| | | 0 | 5 | 2 | | |
| | | 3 | 4 | △6 | | |
| | | 1 | 2 | 5 | | |
| | | | | | | |
| | | | | | | |

V(i,j)

FIG. 9A

R(i,j)

Pn

FIG. 9B

R(i,j)

Pn

FIG. 9C

R(i,j)

Pn

# FIG. 10

R( i , j )

B( i , j )

| (i-2,j-2) | (i-1,j-2) | (i , j-2) | (i+1,j-2) | (i+2,j-2) |
|-----------|-----------|-----------|-----------|-----------|
| (i-2,j-1) | (i-1,j-1) | (i , j-1) | (i+1,j-1) | (i+2,j-1) |
| (i-2,j) | (i-1,j) | (i , j) | (i+1,j) | (i+2, j) |
| (i-2,j+1) | (i-1,j+1) | (i ,j+1) | (i+1,j+1) | (i+2,j+1) |
| (i-2,j+2) | (i-1,j+2) | (i , j+2) | (i+1,j+2) | (i+2,j+2) |

FIG. 11A

FIG. 11B

FIG. 11C

FIG. 11D

FIG. 11E

# FIG. 12

300

301

SURVEILLANCE
CAMERA

102

IMAGE
CAPTURE
SECTION

103 — STORAGE
SECTION

104 — CHARACTERISTIC
INFORMATION
COMPUTING
SECTION

105 — TIME-CHANGE
DETECTING
SECTION

106 — FACTOR
SPECIFYING
SECTION

CONTROL SECTION

107

108

109

# FIG. 13

**INTERNATIONAL SEARCH REPORT**

| International application No. |
| --- |
| PCT/JP2006/301170 |

A. CLASSIFICATION OF SUBJECT MATTER
*G06T7/20*(2006.01)

According to International Patent Classification (IPC) or to both national classification and IPC

B. FIELDS SEARCHED

Minimum documentation searched (classification system followed by classification symbols)
G06T7/00-7/60, G06T1/00, G01N33/48-33/98

Documentation searched other than minimum documentation to the extent that such documents are included in the fields searched
Jitsuyo Shinan Koho        1922-1996   Jitsuyo Shinan Toroku Koho   1996-2006
Kokai Jitsuyo Shinan Koho   1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 6-266840 A  (Hitachi, Ltd.), 22 September, 1994 (22.09.94), Par. Nos. [0017] to [0027]; Fig. 4 (Family: none) | 1-11 |
| Y | JP 4-192781 A  (Toshiba Corp.), 10 July, 1992 (10.07.92), Page 4; Fig. 4 & US 5243418 A1 | 1-11 |
| Y | JP 4-60880 A  (Shimizu Corp.), 26 February, 1992 (26.02.92), Full text; all drawings (Family: none) | 2 |

| ☒ | Further documents are listed in the continuation of Box C. | ☐ | See patent family annex. |

| * | Special categories of cited documents: |
| "A" | document defining the general state of the art which is not considered  to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 17 February, 2006 (17.02.06) | 28 February, 2006 (28.02.06) |

| Name and mailing address of the ISA/ Japanese Patent Office | Authorized officer |
| --- | --- |
| Facsimile No. | Telephone No. |

Form PCT/ISA/210 (second sheet) (April 2005)

| **INTERNATIONAL SEARCH REPORT** | International application No. |
|---|---|
| | PCT/JP2006/301170 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 8-221578 A  (Fujitsu General Ltd.), 30 August, 1996 (30.08.96), Par. Nos. [0012] to [0013]; Fig. 2 (Family: none) | 3,4 |

Form PCT/ISA/210 (continuation of second sheet) (April 2005)

**EP 1 852 825 A1**

**Patent documents cited in the description**

- JP 2003207719 A

- JP 2930618 B